Europäisches Patentamt

**European Patent Office**

Office européen des brevets

(19)

(11) Publication number: **0 038 602**
**B1**

(12) **EUROPEAN PATENT SPECIFICATION**

(45) Date of publication of patent specification: **07.03.84**

(51) Int. Cl.³: **F 16 C  33/10, F 16 C  33/22**

(21) Application number: **81200429.9**

(22) Date of filing: **14.04.81**

(54) **An axial bearing.**

(30) Priority: **18.04.80 NL  8002281**

(43) Date of publication of application:
**28.10.81 Bulletin 81/43**

(45) Publication of the grant of the patent:
**07.03.84 Bulletin 84/10**

(84) Designated Contracting States:
**AT BE CH DE FR GB IT LI LU NL SE**

(56) References cited:
**DE - A - 2 048 747**
**FR - A -  614 035**
**FR - A - 1 162 328**
**FR - A - 1 546 285**
**GB - A -  960 152**
**US - A - 3 469 895**

(73) Proprietor: **IHC HOLLAND N.V.**
**P.O. Box 208**
**NL-3350 AE Papendrecht (NL)**

(72) Inventor: **Visser, Teunis**
**Baanhoek 117**
**NL-3361 GB Sliedrecht (NL)**

(74) Representative: **van der Beek, George Frans et al,**
**Nederlandsch Octrooibureau Johan de Wittlaan**
**15 P.O. Box 29720**
**NL-2502 LS  Den Haag (NL)**

Courier Press, Leamington Spa, England.

An axial bearing

The invention relates to an axial bearing consisting of a rotatable disc provided with grooves mounted on a shaft and a stationary ring-shaped disc in a housing.

Such an axial bearing is known for instance from the Dutch Patent Application 67,04587, laid open to the public. This known hydrodynamic bearing includes on the rotating disc a number of essentially spirally shaped shallow grooves exerting a pumping action and consequently forming a lubricating layer between the disc and the stationary ring.

Such axial bearings are less well suited for absorbing heavy axial loads, require high numbers of revolutions and are not suitable when the lubricating medium may include contaminations.

The object of the invention is to provide an axial bearing not subject to the above drawbacks.

In accordance with the invention this object is achieved in that the stationary ring-shaped disc consists of elastomeric material and has an uninterrupted flat surface facing the grooved surface of the rotatable disc, the grooves of which have at least one flank extending at a small acute angle with the plane of the rotatable disc with the opening of said angle directed in the direction of rotation, the elastomeric material being such that at rest and under load the flat surface of the elastomeric disc is deformed by the grooved surface of the engaging disc. The bearing according to the invention has excellent starting conditions because due to the deformation of the elastomeric disc a small wedge-shaped space exists between the sloping flank of the rotatable disc and the elastomeric disc due to which an immediate build-up of pressure is caused as soon as the relative movement starts. The initial deformation of the elastomeric disc generated by the load is gradually reduced and disappears. With other words the wedge-shaped spaces between the flank and the elastomeric disc surface gradually open. Said grooves will cause a pumping action as well and cause the conveyance of the lubricating medium through the grooves of the disc. The bearing according to the invention may use a simple lubricant such as water and it is not objectionable if this water is somewhat contaminated for the combined action of the elasticity of the elastomeric material and a flushing action of the grooves provide for a continuous flow cleaning and cooling.

It should be noted that from the Dutch Patent Application 75,04176 laid open to public inspection an axial bearing is known consisting of a smooth disc mounted on the shaft and a number of metal slide blocks arranged along a rim and supported in a house which slide blocks are mounted in a tilting manner in the house by means of an elastomeric material. In this case the elastomeric material does not function as a bearing material but for tilting the slide blocks in order to allow the formation of the lubrication wedge.

It further should be noted that from FR—A— 1,546,285 a hydrodynamic bearing is known in which the rotatable part is supported by an elastomeric stationary part which is provided with grooves.

According to the invention both the flanks of the groove may be at a small opposite angle with the plane of the disc. Such an axial bearing is suitable for both directions of rotation.

The grooves may run radially or may have any other suitable course. In the root of the grooves there may be provided recesses for allowing a larger flow of medium.

The invention will now be elucidated in further detail with reference to the drawings, in which

Figure 1 diagrammatically shows a cross sectional view of the bearing according to the invention.

Figure 2 shows a side elevation of the bearing disc, while representing three possible courses along which the grooves may run,

Figure 3 represents a cross section of the disc of Figure 2 along the line III—III,

Figure 4 represents a similar cross section like Figure 3 of a variation thereof, and

Figure 5 shows the principle of the bearing.

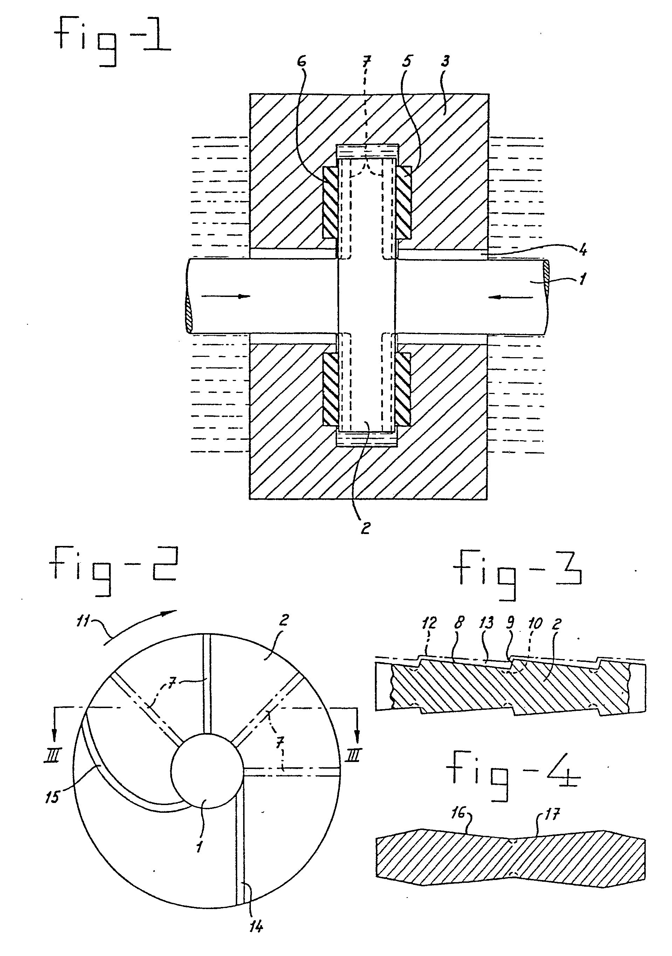

With reference to Figure 1 there is shown a shaft 1 including a disc 2 mounted fixedly on said shaft.

This shaft 1 and disc 2 are axially supported in a housing 3 surrounding the shaft with a clearance 4.

At either side of the disc 2 there are elastomeric discs 5 and 6 mounted fixedly in the house. They possess a flat surface facing disc 2.

The faces of the disc cooperating with the elastomeric discs 5 and 6 are provided with grooves 7 running from the shaft to the circumference. The bearing is shown rotating in a liquid medium, for instance water, that consequently may enter freely between the disc and the elastomeric discs by way of the grooves.

Figure 2 shows a side elevation of the disc 2. A number of radially running grooves are represented therein which grooves will of course be provided on the entire surface of the disc if such grooves are employed.

Figure 3 shows a cross sectional view of the disc while representing the course of the groove and showing that each groove possesses a rising flank 8 and a descending flank 9 whereas in the root of the grooves there may yet be provided conveying grooves 10.

Upon rotating in a direction to the right in Figure 2 like indicated by the arrow 11 and upon being loaded axially there will be caused a deformation in the face of the elastomeric ring 5 or 6 indicated by the interrupted line 11 whereby a small wedge angle 13 is formed between the ring and the rising flanks 8 when the shaft starts rotating. Once this shaft is in rotation the elastomeric face will be deformed somewhat less due to the inertness of the elastomeric material whereby the wedge angle become somewhat larger.

With reference to Figure 2 it has been shown that the groove may also run along a line 14 tangential to the shaft or according to the spiral-shaped line 15.

With reference to Figure 4 there is shown a profile for both directions of rotation. The grooves consequently possess two flanks 16 and 17 both slightly sloping in the same but opposite way.

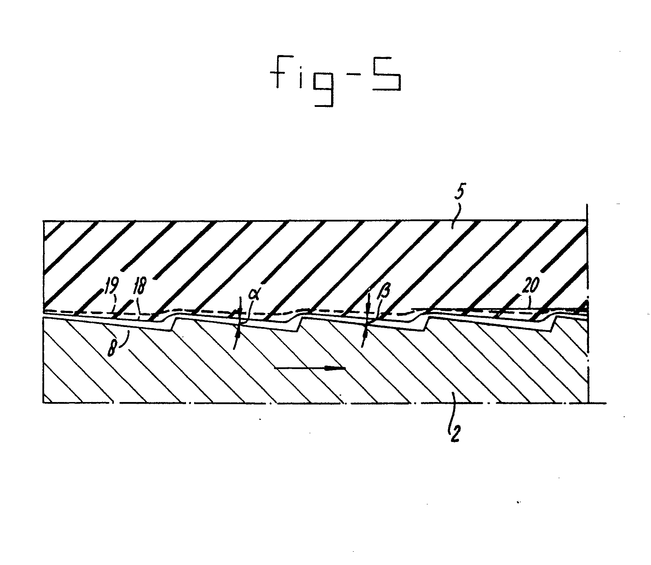

With reference to Figure 5 there is shown the one side of the disc 2 on an enlarged scale.

In resting condition the elastomeric material of e.g. the stationary disc 5 will be deformed under load in the way indicated by the full line 18 leaving between the flanks 8 of the disc 2 and the deformed surface 18 of the elastomeric disc 5 a small wedge shaped spaced indicated with the angle $\alpha$.

When rotation starts in the direction of the arrow the deformation will almost or entirely disappear as indicated by the lines 19 or 20 respectively making the wedge angle larger as indicated with the angle $\beta$.

As the elastomeric material under pressure behaves like a liquid the deformation starts to move with the movement of the rotatable disc before and during its gradual disappearance.

## Claims

1. An axial bearing consisting of a rotatable disc (2) provided with grooves (7) mounted on a shaft (1) and a stationary ring-shaped disc (5, 6) in a housing, characterized in that the stationary ring-shaped disc (5, 6) consists of elastomeric material and has an uninterrupted flat surface facing the grooved surface of the rotatable disc (2), the grooves (7) of which have at least one flank (8) extending at a small acute angle with the plane of the rotatable disc (2) with the opening of said angle directed in the direction of rotation, the elastomeric material being such that at rest and under load the flat surface of the elastomeric disc is deformed by the grooved surface of the engaging disc (2).

2. The axial bearing according to claim 1, characterized in that both the flanks of the groove are at a small but opposite angle with the plane of the disc.

## Revendications

1. Palier axial consistant en un disque rotatif (2) muni de gorges (7), calé sur un arbre (1), et en un disque annulaire stationnaire (5, 6), dans un boîtier, caractérisé par le fait que le disque annulaire stationnaire (5, 6) consiste en un élastomère et présente une surface plane ininterrompue située en regard de la surface du disque rotatif (2) comportant des gorges, dont les gorges (7) possèdent au moins un flanc (8) s'étendant à un petit angle aigu par rapport au plan du disque rotatif (2), l'ouverture dudit angle étant dirigée dans le sens de rotation, l'élastomère étant tel que, au repos et sous charge, la surface plane du disque en élastomère soit déformée par la surface, munie de gorges, du disque (2) avec lequel elle vient en contact.

2. Palier axial selon la revendication 1, caractérisé par le fait que les deux flancs de la gorge présentent une inclinaison légère, mais de sens opposés par rapport au plan du disque.

## Patentansprüche

1. Axiallager, bestehend aus einer drehbaren Scheibe (2), die mit Nuten (7) versehen ist und auf einer Welle (1) montiert ist, und einer Feststehenden, ringförmigen Scheibe (5, 6) in einem Gehäuse, dadurch gekennzeichnet, daß die feststehende, ringförmige Scheibe (5, 6) aus einem elastomeren Material besteht und eine ununterbrochen flache Oberfläche aufweist, die der mit Nuten versehen Oberfläche der drehbaren Scheibe (2) gegenüberliegt, deren Nuten (7) mindestens eine sich in einem kleinen, spitzen Winkel zur Ebene der drehbaren Scheibe (2) erstreckende Flanke (8) aufweisen, wobei die Offnung des Winkels in Drehrichtung weist, und daß das elastomere Material derart beschaffen ist, daß die flache Oberfläche der aus elastomerem Material bestehenden Scheibe in Ruhelage und unter Last durch die mit Nuten versehene Oberfläche der mit ihr in Eingriff kommenden Scheibe (2) verformt wird.

2. Axiallager nach Anspruch 1, dadurch gekennzeichnet, daß beide Flanken der Nut bezüglich der Ebene der Scheibe einen kleinen, jedoch entgegengesetzten Winkel aufweisen.

Fig-1

Fig-2

Fig-3

Fig-4

0 038 602

fig-5